(19) Europäisches Patentamt
European Patent Office
Office européen des brevets

(11) Publication number: **0 015 299**
**B1**

(12) **EUROPEAN PATENT SPECIFICATION**

(45) Date of publication of patent specification: **20.10.82**

(21) Application number: **79100685.1**

(22) Date of filing: **08.03.79**

(51) Int. Cl.³: **F 17 D 1/02,** A 62 C 4/02, F 16 L 55/00, C 07 C 11/04

(54) **Apparatus and method for reaction boundary suppressor systems.**

(43) Date of publication of application:
**17.09.80 Bulletin 80/19**

(45) Publication of the grant of the patent:
**20.10.82 Bulletin 82/42**

(84) Designated Contracting States:
**BE NL**

(56) References cited:
**CH - A - 538 646**
**DE - A - 2 436 206**
**DE - C - 741 620**
**GB - A - 363 628**

(73) Proprietor: **ATLANTIC RICHFIELD COMPANY**
**Arco Plaza 515 S. Flower Street**
**Los Angeles California 90071 (US)**

(72) Inventor: **Worrell, George Richard**
**501 North Providence Road Holly House**
**Media Pennsylvania (US)**
Inventor: **McKay, Frank Fay, Jr.**
**903 Lindenwood**
**Baytown Texas (US)**

(74) Representative: **Baillie, Iain Cameron et al,**
***c/o* Ladas & Parry Isartorplatz 5**
**D-8000 München 2 (DE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

**EP 0 015 299 B1**

Apparatus and method for reaction boundary suppressor systems

*Techinical field*

This invention relates to compressed ethylene and systems involving the piping of compressed ethylene along relatively great distances. In its broader aspects, it relates to reaction boundary suppressors in facilities in which a reaction boundary such as a flame front of an undesired reaction (initiated by an accident) has a propensity to migrate through a gas pipeline. The similar minimizing of the spreading of flames through a gas pipeline system is sometimes discussed in relation to the strategy of placement of flame arrestors.

*Background art*

It has long been known that a saturated hydrocarbon gas, such as ethane, propane, or methane, could be compressed and transmitted through pipelines without significant problems other than the hazard of combustion. By maintaining acetylene at about atmospheric pressure and quite pure, acetylene can be handled safely. At an early date, it was learned that acetylene was quite hazardous when compressed by reason of its propensity to undergo a decomposition. The flame speed for such decomposition is greater than the speed of sound, thus classifying the reaction as a deformation instead of deflagration. The early discovery of the violence of the detonation of compressed acetylene resulted in municipal ordinances prohibiting systems using compressed acetylene.

Compressed ethylene is neither as safe as compressed ethane nor as dangerous as compressed acetylene. It has been known that a decomposition reaction could advance throughout a great length of a pipe containing compressed ethylene. The temperature of the spontaneously advancing decomposition reaction is hot enough to cause blistering of paint on the external surface of a pipe in which comprressed ethylene decomposes to a mixture comprising soot, carbon, minor amounts of hydrogen, minor amounts of miscellaneous hydrocarbon, and a molar amount of methane approximately equal to the initial ethylene. The speed of the flame is quite low, eliminating the detonation hazard but permitting explosions of vessels unable to withstand the pressures built up by the decomposition reaction. The build-up of pressure is attributable primarily to the increased temperature of the gas mixture, instead of the conventional volume increasing reaction. Because piping for compressed ethylene is built with an adequate safety feature, it is conceivable that the decomposition reaction boundary might move though a pipe for a very considerable distance without any explosion and even without any rupture of the pipe.

The amount of cooling necessary for quenching an accidental reaction is effected by many factors, including flame speed, exothermicity of the reaction, magnitude of gas compression, pipe diameter, single or multiple flames, and related factors. Heretofore, most flame arrestors have had a cooling capacity which is only a small fraction of the cooling capacity necessary to quench the forward and trailing reaction boundaries for the decomposition of ethylene at 100 atmospheres in a pipeline of about 30 cm diameter. Because accidents sometimes involve hazards which had not been predicted, there has been a long standing demand for flame arrestors having an adequate safety margin as regards cooling capacity sufficient to quench a reaction.

In a pipe in which compressed ethylene is flowing and in which a localized surge of heat initiates decomposition reaction boundaries, such boundaries can initially move in two opposite directions or in as many directions as the piping system permits. In the typical single pipe in which the decomposition reaction boundaries start moving initially in two opposite directions and in which the ethylene is flowing in one of those two directions, the pipe is heated by each of the two reaction boundaries advancing in the same direction as the flowing ethylene. Whether the boundaries are identified as leading and trailing boundaries or as head and tail boundaries, the second arriving boundary is more difficultly quenched because of the residual heat from the first arriving boundary.

The speed of each reaction boundary is only a small fraction of the normal speed of the flow of the ethylene. The temperature of a particular zone of the pipe is increased because of the passage of each of the two flame fronts through such zone, usually within minutes of each other. Moreover, the methane gas and suspended soot in the methane zone between the two fraction boundaries is hot enough to warm the pipe but undergoes cooling. The total heat capacity of a plug-zone of decomposition products (conveniently called a methane zone) and the two reaction boundaries is far greater than the heat capacities of advancing segments of hot gases for which some flame arrestors have been designed. Some flame arrestors have been designed for flame speeds much higher than the remarkably slow speed of advancement of the ethylene cracking reaction boundary, which is sometimes a few (i.e. from 3 to 20) cm per minute and rarely if ever faster than 4000 cm per minute. It is the combination of the potentially low speed of advancement of the reaction boundary and the remarkably large heat capacity of the elongated methane zone which imposes unique restraints upon quenching the ethylene decomposition reaction.

The exothermic decomposition of the

ethylene corresponds to the general equation.

$$C_2H_4 \rightarrow CH_4 + C$$

Because the reaction mixture is heated by the exothermic reaction, and such heat tends to expand the gas, one easily overlooks the fact that the equation involves no change in volume of the gas. The soot which is formed generally contains only about 1% hydrogen. Although methane is the principal gaseous product, minor amounts of many hydrocarbon materials and hydrogen can form under the unusual conditions leading to the thermal cracking (i.e. decompostion) of ethylene.

Chemical engineers have been dealing with compressed ethylene for more than 50 years, and have long been aware of the accidental decomposition hazard. The range of incipient decomposition conditions, above which decomposition cannot readily be prevented, and below which decomposition is initiated with greater difficulty, has been investigated. The boundary of the decomposition reaction can advance more readily within such incipient conditions as the pressure is increased, as the temperature is increased, and as the hot tube diameter is increased. Systems utilizing compressed ethylene ordinarily have featured process conditions intended by the engineers to significantly decrease the possibility of the accidental decomposition of compressed ethylene. Thus compressors for ethylene are generally operated so that the peak temperature of the compressed gas is kept below the danger point.

Notwithstanding the processing of large quantities of compressed ethylene during the past century, the number of serious catastrophies attributable to the unintended decompostion of ethylene reported in the safety literature has been relatively small. Hence ethylene decompostion accidents have been treated as nuisance problems. Some petroleum technologists are essentially unaware of the ethylene decomposition hazard.

Ethylene is relatively inexpensive compared to acetylene and/or some other gaseous reactants which might be lost by flame migration. There has not been a willingness to invest in unusual safety equipment for ethylene in the way that there has been for chemicals known to be more costly or more hazardous. There has been a continuing demand for a simple system for coping with the hazards pertinent to the decomposition of ethylene, while still preserving the low investment cost and low maintenance cost essential for handling of compressed ethylene.

In its broader aspects, various gas pipeline systems have employed flame arrestors and related devices to quench the advancement of a reaction boundary (generally called a flame front) beyond established limits (e.g. GB—A—363,628). The complexity and large capital investment required for prior art systems has created a long standing and continuing demand for an appropriate means and method for quenching an undesired reaction advancing through a pipeline system.

*Disclosure of invention*

In accordance with the present invention, a system in which ethylene flows through pipes is protected for halting the advancement of a boundary of the decomposition of ethylene by providing reaction boundary supporessors at appropriate locations in the system, thereby decreasing the possibility of accidental advancing into a zone of critical danger. Each reaction boundary suppressor comprises an array of spaced apart tubes through which portions of the gas stream flow to cool and quench such gas stream. A fluid $F_1$ maintained below 150°C but normally maintained at about ambient temperature serves to cool the exterior walls of said tubes. An aqueous system (e.g. aqueous ethylene glycol containing corrosion inhibitors, etc.) and normally lying dormant, and designed to get warmer (even to volatilize glycol vapor and steam) when cooling a methane zone and its boundaries is preferably employed. Such pool of aqueous coolant must be deep enough to provide a significant depth of liquid above the top strata of tubes. When a flame front (or reaction boundary) advances to heat the liquid, and possibly volatilize some of the liquid, the amount of liquid above the uppermost row of tubes is sufficient that the liquid level will not fall below such top tubes before the plurality of flame fronts have been quenched. Each reaction boundary suppressor also includes means for connecting the suppressor to an inlet pipe and to an exit pipe, together with entry plenum means for directing the gas from the entry pipe, through the entry plenum, through the array of tubes, through the exit plenum, and into the exit pipes. Such gas flow resembles the flow of gas through a water cooled heat exchanger of the tube and shell type. However, because the gas is circulating, but the aqueous liquid is normally a dormant pool in a relatively deep vat in a reaction boundary suppressor, there are numerous structural differences from a conventional tube and shell heat exchanger. A steam vapor outlet permits the liquid to be volatilized from a suppressor. The topmost tubes of a suppressor are at a significant depth below the normal liquid level. The suppressor tubes are spaced apart at distances promoting prompt quenching of the reaction boundary instead of at distances favoring economical heat transfer from a circulating liquid. Conventional tube and shell heat exchangers rely upon pumping systems to circulate the liquid. In a reaction boundary suppressor, the pool of liquid is normally dormant and quiescent for months. Even when a flame front enters a reaction boundary suppressor, the liquid circulation is merely that

attributable to temperature differences without the turbulence and rapid turnover of a pump driven circulation system.

*Brief description of drawings*

In the accompanying drawings, Fig. 1 is a schematic flow sheet of a gas line piping system featuring reaction boundary suppressors to quench any advancing boundary of exothermic reaction at zones ahead of where the gas stream might enter any critical zone.

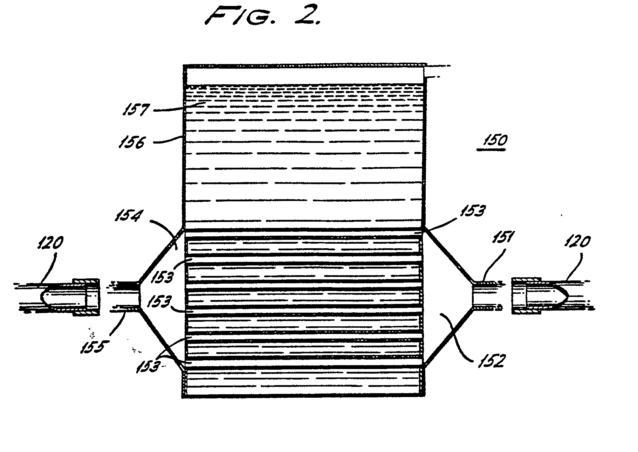

Fig. 2 is a schematic showing of a tube and shell-type of reaction boundary suppressor effective for the quenching of the advancing boundary of the exothermic cracking reaction of compressed ethylene.

*Best mode of carrying out the invention*

As shown in Fig. 1, a gas pipeline system 20 can be a loop of 30 cm. steel pipe permitting the flow of compressed ethylene $F_2$ at a pressure maintained above 30 atmospheres and normally at about 100 atmospheres to circulate and/or flow from plants in which the ethylene is produced to plants in which the ethylene is consumed. The schematic showing of Fig. 1 indicates that the ethylene is produced in two olefins plants 21 and 22. Such ethylene is directed from plants 21 and 22 into the gas pipeline system 20 through reaction boundary suppressors 23 and 24, so that the hazard of any accidental decomposition of ethylene does not advance from the pipeline system 20 into either olefins plant.

Some of the ethylene is employed in the production of polyethylene in a polyethylene plant 25. Particular attention is directed to that fact that a reaction boundary suppressor 26 is interposed between the ethylene pipeline system 20 and the polyethylene plant 25. Similarly, a glycol plant 27 is protected by a reaction boundary supressor 28. Additional plants for the conversion of ethylene, shown as 29 and 31, are similarly protected by reaction boundary suppressors 30, 32. Fig. 1 symbolizes one pattern of flexibility in production, transportation, storage and consumption of ethylene by showing a plurality of ethylene conversion plants associated with a plurality of ethylene sources and an appropriate ethylene storage facility through the gas pipeline system 20.

A reaction boundary suppressor 33 in pipeline system 20 symbolizes the potentiality of protecting a portion of a pipeline from the effects of an advancing boundary of an exothermic cracking reaction. Any accidental decomposition reaction merely destroying a plug of ethylene in the pipeline can be treated as a loss of ethylene which is not a relatively costly matter. The explosion and rupture of a pipeline is the more serious hazard which the safety engineers seek to prevent, while tolerating the migration of a decomposition reaction as long as it is strictly within what is merely a pipeline. However, it is very important that the compressed ethylene maintained in four standby storage systems 34 a, b, c, d be protected from the accidental decomposition reaction. The quantity of ethylene in any of such storage systems is large enough to merit protection. Accordingly, each of the storage systems 34 a, b, c, and d is protected by a reaction boundary suppressor 37, 38, 35 and 36 respectively. When valves 39 and 40 are open, the piping system 20 partakes of the nature of a closed loop. Communication lines 41 provide sensing signals and actuating signals to controls 42 intended to improve the functioning of storage system 34.

As shown in Fig. 2, a reaction boundary suppressor 150 comprises a pipe 151 adapted to connect with an appropriate portion of a pipeline system 120 for the compressed ethylene. The gas entering through pipe 151 is distributed in a plenum 152 to a sufficient number of small tubes 153 that the cross sectional area of the plurality of tubes 153 is equivalent to a reasonable percentage (e.g. 10% to 300%) of the cross sectional area of 151. Each of tubes 153 is spaced from adjacent tubes sufficiently to permit the flow of an aqueous system therebetween in accordance with good engineering practice for promoting efficient heat exchange with the dormant cooling capacity of the pool of liquid. At the other end of the reaction boundary suppressor, there is an exit plenum 154 and exit pipe 155 which directs the effluent from the heat exchanger back into pipeline system 120. A shell 156 defines a vat 157 containing an aqueous system (e.g. water containing ethylene glycol, corrosion inhibitors, etc.) adapted to cool the tubes 153 immersed therein.

Safety studies relating to the speed of travel of the boundary of a reaction in a pipeline are generally discussed in terms of flame speeds. The accidental reaction most often investigated is that of a combustible gas with oxygen. The visible flame from such combustion can be followed with motion pictures when the flame is traveling in transparent tubing. The reaction of methane and oxygen leads to a flame speed described in some literature as about 39 centimeters per second, which is similar to the flame speed for combustion of ethyl acetate. The combustion of the acetylene is significantly faster, having a flame speed of 163 centimeters per second. Hydrogen burns with a flame speed of 306 centimeters per second. An estimated speed of reaction of a hydrocarbon with bromine, chlorine, nitric oxide or other reactant can be calculated using the flame speed for combustion with oxygen and thermodynamic data for the reaction.

The decomposition of ethylene is quite remarkable by reason of the measurement of flame speeds which vary significantly depending upon variables such as pressure, temperature, tube diameter, turbulence, and the like. Speeds as low as about 0.1 centimeter per second have

been reported for the cracking of ethylene, but its peak speed is not so clearly established, but is apparently less than 67 cm per second. The extent to which a pipe can be overheated as well as the case of environmental cooling to a quenching temperature are affected by the flame speed of the reaction. If the gas stream is advancing in one direction, and the decomposition is advancing in the opposite direction at the substantially identical speed, a static boundary can exist which tends to heat the pipeline wall to the temperature of the decomposition reaction. Such purely static boundaries are sufficiently rare that they are of more theoretical than practical interest. It is important to recognize that the quenching of the advancing ethylene decomposition reaction boundary when it is migrating (the resultant of the gas stream flow and the flame speed) at even a few centimeters per second is much easier than when such boundary migration approaches static conditions by migrating, for example, at less than about 3 cm. per second.

In the broader aspects of the invention, the use of a reaction front suppressor as a flame arrestor has applicability to substantially any gaseous mixture which might be accidentally reacting in a pipeline system. The important need is that of permitting a sufficent cooling of the gaseous mixture to assure the cooling of the reaction mixture below the point at which the reaction can be propagated. If the reaction boundary suppressor consists of tubes having about 1 or 2 centimeters inside diameter and a length of about 3 meters, and if the number of tubes is such that the total cross sectional area of the tubes is about one-half the cross sectional area of the main pipeline, then the water cooling by the reaction boundary suppressor can quench most of the flames which might accidentally occur in gas pipeline systems. The total heat capacity of the hot zone which must be quenched in most gas pipelines is only a small fraction of the heat capacity of the plug of methane and two decomposition boundaries which can develop in a compressed ethylene pipeline system. Only rarely does the pipeline encounter the double boundary difficulty involving an exothermic reaction at each end of a moving plug of hot zone as occurs in the decomposition of compressed ethylene. For most gas pipeline systems, the quenching of the initial flame front is sufficient to improve the safe conditions within the pipeline system.

Particular attention is directed to the fact that the normal level of the aqueous liquid is far above the topmost tube through which the gas stream flows. Normally, the gas stream is at the same ambient temperature as the liquid in the reaction boundary suppressor. If an accidental reaction starts in the pipeline, and migrates to the inlet of the reaction boundary suppressor, then the liquid is heated as the reaction boundary starts moving through the small tubes of the reaction boundary suppressor. Under favorable conditions, the reaction can be quenched before the liquid is heated to its boiling point. The reserve cooling capacity of the reaction boundary suppressor is attributable in part to the cooling by evaporation of steam (and the vapor of the antifreeze agent such as ethylene glycol) from the top of the liquid. As the liquid boils away and as the liquid level is lowered, the tubes continue to be cooled to such boiling liquid temperature which is below 150°C., thus being cool enough to quench the reaction. Only after the liquid has been evaporated until the top layer of tubes is exposed is there loss of the potentiality of the liquid cooling.

The depth of the liquid above the topmost tube is desirably somewhat greater than the depth of the liquid below such topmost tube, assuming that the cross-sectional area of the liquid is generally the same at all depths. Under some conditions, it may be appropriate to employ a reservoir above the tubes which is either smaller or larger in cross-sectional area than the zone in which the tubes are immersed in liquid. The liquid in the vat can be designated as a dormant pool of cooling liquid.

Each reaction boundary suppressor has a standby capacity for suddenly cooling a plug of hot gas which unexpenctedly arrives at one end, so that the gas leaving the other end is assuredly cooled to a temperature so low that the undesired reaction is quenched. The heat from such accidental plug of hot gas is dissipated into the environment because of the extremely large dormant cooling capacity of the reaction boundary suppressor.

*Industrial applicability*

The reaction boundary suppressor of the present invention can be utilized as a flame arrestor in any of a considerable number of the situations in which flame arrestors have been used heretofore. A characteristic of the invention is providing a quantity of cooling of the gas stream that is significantly greater than the amount of cooling which has been typical of may previous flame arrestors. The present invention can be deemed to be pertinent to a system comprising pathways for the flow of gas which normally can flow safely, but which is susceptible to accidental participation in an exothermic reaction capable of advancing in various directions from a point of origin, and features a system for halting the advancement of a reaction boundary of such exothermic reaction which consists of controlling the path of the gas flow so that, at appropriate zones of contemplated flow of the gas, the gas, instead of flowing through a conventional portion of a gas pipe line, is directed through an array of thin gas streams having effective cross sectional dimensions not greater than about 4 centimeters, and having a length greater than about a meter; and cooling said thin gas streams by heat exchanging said gas streams

with a fluid $F_3$ maintained below 150°C but normally maintained at about ambient temperature, whereby the gas immediately adjacent any advancing reaction boundary is cooled below reaction temperature in said thin gas streams, and whereby the gas completing the flow through said thin gas streams does not undergo the exothermic reaction because of the quenching thereof by said head exchange with the cooling fluid.

To the extent that the present invention is deemed to be concerned with an apparatus as distinguished from a method, the subject matter can be clarified as an apparatus for haltring the advancement of the reaction boundary of an exothermic reaction in a gas pipe line system in which a gas normally can flow safely, but which gas is susceptible to accidental participation in an exothermic reaction capable of advancing in at least one direction from a point of origin, said apparatus consisting of: an array of narrow tubes having a length of at least 1 meter and an internal diameter not greater than about 4 centimeters through which the gas stream is adapted to flow; structural means adapted to maintain the exterior of said array of narrow tubes in a fluid $F_3$ maintained below 150°C but normally maintained at about ambient temperature, and adapted to cool the gas flowing whithin said array of tubes to a temperature below flame temperature, whereby in the event of the advancement of a reaction boundary into one end of the array of narrow tubes the reaction boundary is cooled and quenched to below reaction temperature before such reaction boundary can advance to the other end of such tubes; entry means directing gas flowing through an entry pipe associated with a gas pipe line into said array of tubes; and exit means directing gas flowing through said array of tubes into an exit pipe associatable with a gas pipe line.

In a preferred embodiment of the invention, the entry means and the exit means are sufficiently equivalent that the potential flow of reaction boundary may be through the array of tubes in either direction, whereby what is utilized as the entry means and the exit means is controlled by the direction of the flow of reaction boundary in the pipeline.

The present invention, whether as a system or apparatus, has particular applicability for controlling the migration of the reaction boundary of the decomposition reaction of compressed ethylene.

**Claims**

1. In a system for the pipeline flow of ethylene compressed at above 30 atmospheres, wherein non-catalytic decomposition of ethylene to form carbon, miscellaneous products, and methane is an exothermic reaction which can advance from a point or origin in various directions, the method of halting the advancement of a reaction boundary of such decomposition reaction which is characterized by the following steps:

controlling the path of the compressed gaseous ethylene so that, at appropriate zones of contemplated flow of ethylene, the ethylene instead of flowing through a conventional portion of a gas pipeline, is directed through an array of narrow tubes having cross-sectional dimensions of not more than 4 centimeters and having a length greater than one meter, and

cooling the ethylene in said plurality of narrow tubes by transferring heat from the ethylene to a liquid maintained below 150°C., whereby the ethylene immediately adjacent any advancing reaction boundary is cooled below decomposition temperature in said narrow tubular streams, and whereby the compressed ethylene flowing throughout the entire length of said narrow tubular stream is quenched to a temperature below the decomposition temperature of ethylene at such conditions.

2. In a system for the pipeline flow of enthylene compressed at above 30 atmospheres, wherein non-catalytic decomposition of ethylene to form carbon, miscellaneous products, and methane is an exothermic reaction which can advance from a point or origin in various directions, the apparatus for halting the advancement of a reaction boundary of such decomposition reaction which is characterized by;

an array of narrow tubes (153) having a length of at least 1 meter and an internal diameter of not greater than about 4 centimeters through which said compressed ethylene flows;

a shell (156) defining a vat (157), said vat containing a pool of liquid normally maintained at about ambient temperature, the upper surface of the pool of liquid being exposed to the surroundings in such manner that vapor may evaporate from the upper surface of the liquid, said arrays of tubes being immersed significantly below the surface of said pool of liquid;

entry means directing gas flowing through an entry pipe (151) connected to a gas pipeline (120) into said plurality of tubes; and

exit means directing gas flowing through said plurality of tubes into an exit pipe (155) connected to said gas pipeline (120).

3. In an ethylene gas pipeline system comprising pathways for the flow of gas compressed at above 30 atmospheres which can flow safely in said pipeline system, but which is susceptible to accidental participation in an exothermic reaction capable of advancing in various directions from a point of origin, the apparatus for halting the advancement of a reaction boundary of such exothermic reaction which is characterized by:

An array of narrow tubes (153) having a length of at least 1 meter and an internal

diameter not greater than 4 centimeters through which the gas stream flows;

structural means for maintaining the exterior of said array of narrow tubes immersed significantly below the upper surface of a liquid normally maintained at about ambient temperature, and adapted to cool the gas flowing within said array of tubes to a temperature below 150°C., whereby in the event of the advancement of a reaction boundary into one end of the array of narrow tubes the reaction boundary is cooled and quenched to below reaction temperature before such reaction boundary can advance to the other end of such tubes;

entry means directing gas flowing through an entry pipe (151) connected to said gas pipeline (120) into said array of tubes; and

exit means directing gas flowing through said array of tubes into an exit pipe (155) connected to said gas pipeline (120).

4. In an ethylene gas pipe pipeline system comprising pathways for the flow of a gas compressed at above 30 atmospheres which normally can flow safely in said pipeline system, but which is susceptible to accidental participation in an exothermic reaction capable of advancing in various directions from a point of origin, the method of halting the advancement of the reaction boundary of such exothermic reaction in the gas pipeline system which is characterized by the following features:

controlling the path of the gas flow so that at appropriate zones of contemplated flow of the gas, the gas, instead of flowing through a conventional portion of a gas pipeline, is directed through an array of narrow tubes having cross sectional dimensions of not greater than 4 centimeters, and having a length greater than one meter; and

cooling the gas in said narrow tubes by heat exchanging said gas with a liquid normally maintained at about ambient temperature, whereby the gas immediately adjacent any advancing reaction boundary is cooled below reaction temperature in said thin gas streams whereby the gas flowing through said narrow tubes does not undergo the exothermic reaction because of the quenching thereof by said heat exchange with the cooling liquid.

5. The apparatus according to claim 3, characterized in that entry means and exit means are sufficiently equivalent that the potential flow of reaction boundary may be through the array of tubes in either direction, whereby what is utilized as the entry means and exit means is controlled by the direction of the flow of reaction boundary in the pipeline.

6. The apparatus according to claim 3, characterized in that a vaporizable aqueous system serves as the liquid maintained normally at about ambient temperature.

7. The apparatus according to claim 2, characterized in that the apparatus is adapted to handle compressed ethylene maintained at a temperature below 150°C.

**Revendications**

1. Procédé pour arrêter l'avancement d'un front de réaction, dans un système destiné à l'écoulement en pipe-line d'éthylène comprimé au-dessus de 30 atmosphères, dans lequel une décomposition non catalytique de l'éthylène donnant du carbone, divers produits et du méthane constitue une réaction exothermique qui peut avancer dans diverses directions à partir d'un point d'origine,

caractérisé en ce que le procédé comprend les étapes suivantes:

régulation du trajet de l'éthylène gazeux comprimé pour que, à des zones appropriées de l'écoulement d'éthylène envisagé, l'ethylène au lieu de circuler dans une partie classique de pipeline soit dirigé dans une série de tubes étroits ayant des dimensions en coupe de pas plus de 4 centimètres et ayant une lingueur supérieure à un mètre, et

refroidissement de l'éthylène dans ladite série de tubes étroits par transfert de chaleur de l'éthylène à un fluide maintenu en-dessous de 150°C, ce qui fait que l'éthylène immédiatement adjacent à tout front de réaction en avancement est refroidi en-dessous de la température de décomposition dans lesdits courants tubulaires étroits et que l'éthylène comprimé s'écoulant sur toute la longueur dudit courant tubulaire étroit est refroidi à une température inférieure à la température de décomposition de l'éthylène dans de telles conditions.

2. Appareil pour arrêter l'avancement d'un front de réaction dans un système permettant l'écoulement en pipe-line d'éthylène comprimé au-dessus de 30 atmosphères, dans lequel une décomposition non catalytique de l'éthylène donnant du carbone, divers produits et du méthane constitue une réaction exothermique qui peut avancer dans diverses directions à partir d'un point d'origine,

caractérisé en ce qu'il comporte:

un série de tubes étroits (153) ayant une longueur d'au moins 1 mètre et un diamètre interne qui n'est pas supérieur à environ 4 centimètres dans lequel ledit éthylène comprimé s'écoule;

une enveloppe (156) délimitant un bac (157), ledit bac contenant un bain de liquide normalement maintenu au voisinage de la température ambiante, la surface supérieure du bain de liquide étant exposée au milieu environnant de telle sorte que la vapeur peut s'évaporer de la surface supérieure du liquide, ladite série de tubes étant immergée de façon nette en-dessous de la surface dudit bain de liquide;

un moyen d'entrée dirigeant l'écoulement du gaz, par l'intermédiaire d'une conduite d'entrée

(151) reliée à un pipe-line à gaz (120), vers ladite série de tubes; et

un moyen de sortie dirigeant l'écoulement du gaz, par l'intermédiaire de ladite série de tubes, dans une conduite de sortie (155) reliée audit pipe-line à gaz (120).

un moyen d'entrée dirigeant l'écoulement du gaz, par l'intermédiaire d'une conduite d'entrée reliée à un pipe-line à gaz, vers ladite série de tubes; et

un moyen de sortie dirigeant l'écoulement du gaz, par l'intermédiaire de ladite série de tubes, dans une conduite de sortie reliée audit pipe-line à gaz.

3. Appareil pour arrêter l'avancement d'un front de réaction dans un système de pipe-line pour gas comprenant des trajets pour l'écoulement d'un gaz qui peut normalement s'écouler sans risques, comprimé au-dessus de 30 atmosphères, dans ledit système mais qui est susceptible d'une participation accidentelle dans une réaction exothermique pouvant avancer dans diverses directions à partir d'un point d'origine,

caractérisé en ce qu'il comprend:

un série de tubes étroits (153) ayant une longueur d'au moins 1 mètre et une diamètre interne non supérieur à environ 4 centimètres, dans lesquels le courant de gaz s'écoule;

des moyens structureux adaptés pour maintenir l'extérieur de ladite série de tubes étroits immergé dans un fluide normalement maintenu au voisinage de la température ambiante, et adapté pour refroidir le gaz s'écoulant dans ladite série de tubes à une température inférieure à 150°C, grâce à quoi, au cas de l'avancement d'un front de réaction dans une extrémité de la série de tubes étroits, le front de réaction est refroidi en-dessous de la température de réaction avant que ce front de réaction ne puisse avancer vers l'autre extrémité desdits tubes;

un moyen d'entrée dirigeant l'écoulement de gaz, par l'intermédiaire d'une conduite d'entrée (151) reliée audit pipe-line à gaz (120), vers ladite série de tubes, et

un moyen de sortie dirigeant l'écoulement du gaz, par l'intermédiaire de ladite série de tubes, dans une conduite de sortie (155) reliée audit pipe-line à gaz (120).

4. Procédé pour arrêter l'avancement d'un front de réaction dans un système de pipe-line pour éthylène gazeux comprenant des trajets pour l'écoulement d'un gas qui normalement peut s'écouler sans risques, comprimé au-dessus de 30 atmosphères, dans ledit système, mais qui est susceptible d'une participation accidentelle à une réaction exothermique pouvant avancer dans diverses directions à partir d'un point d'origine, caractérisé par les points suivants:

régulation du trajet de l'écoulement gazeux pour que, aux zones appropriées de l'écoulement du gaz envisagé, le gaz au lieu de s'écouler dans une portion classique d'un pipe-line pour gaz, soit dirigé dans une série de tubes étroits ayant des dimensions en coupe qui ne sont pas supérieures à 4 centimètres et ayant une longueur supérieure à un mètre, et

refroidissement du gaz dans lesdits tubes étroits par échange de chaleur entre le gaz et un fluide normalement maintenu au voisinage de la température ambiante, ce qui fait que le gaz immédiatement adjacent à tout front de réaction en avancement est refroidi en-dessous de la température de réaction dans lesdits fins courants gazeux grâce à quio le gaz achevant de s'écouler dans lesdits tubes étroits ne subit pas la réaction exothermique en raison de son refroidissement par ledit échange de chaleur avec le fluide de refroidissment.

5. Appareil selon la revendication 3, caractérisé un ce que les moyens d'entrée et de sortie sont suffisamment équivalents pour que l'écoulement potentiel du front de réaction puisse se faire dans la série de tubes dans l'un ou l'autre sens, ce qui fait que ce qu'on utilise comme moyen d'entrée et moyen de sortie est déterminé par le sens de l'écoulement du front de réaction dans le pipe-line.

6. Appareil selon la revendication 3, caractérisé en ce qu'un système aqueux vaporisable sert de liquide maintenu normalement au voisinage de la température ambiante.

7. Appareil selon la revendication 2, caractérisé en ce que l'appareil est conçu pour traiter de l'éthylène comprimé maintenu à une température inférieure à 150°C.

**Patentansprüche**

1. In einem System zum Fortleiten von Athylen, das auf mehr als 30 Atmosphären verdichtet ist, in einer Rohrleitung, wobei die nichtkatalytische Zersetzung des Athylens zu Kohlenstoff, verschiedenen Produkten und Methan eine exotherme Reaktion ist, die von einem Ursprungsort in verschiedenen Richtungen fortschreiten kann, das Verfahren zum Anhalten des Fortschreitens einer Reaktionsgrenze dieser Zersetzungsreaktion, gekennzeichnet durch folgende Schritte:

Der Strömungsweg des verdichteten gasförmigen Athylens wird so gesteuert, daß in geeigneten Zonen der beabsichtigten Strömung des Äthylens dieses anstatt durch einen üblichen Teil einer Gasrohrleitung zu strömen durch eine Anordnung von engen Rohren geführt wird, die Querschnittsdimensionen von höchstens 4 Zentimetern haben und länger sind als 1 Meter;

dans Athylen wird in den genannten mehreren engen Rohren gekühlt, indem Wäre von dem Athylen auf eine Flüssigkeit übertragen wird, die unter 150°C gehalten wird, so daß das in engen Rohren strömende, verdichtete Äthylen in nächster Nähe einer etwa vorhandenen, fortschreitenden Reaktionsgrenze unter die Zersetzungstemperatur abgekühlt wird und das über die ganze Länge des engen Stroms in den Rohren strömende, verdichtete Athylen auf eine Temperatur unter der Zersetzungstemperatur des Athylens unter diesen Bedingungen abgeschreckt wird.

2. In einem System zum Fortleiten von Athylen, das auf mehr als etwa 30 Atmosphären verdichtet ist, in einer Rohrleitung, wobei die nichtkatalytische Zersetzung des Athylens zu Kohlenstoff, verschiedenen Produkten und Methan eine exotherme Reaktion ist, die von einem Ursprungsort in verschiedenen Richtungen fortschreiten kann, die Vorrichtung zum Anhalten des Fortschreitens einer Reaktionsgrenze dieser Zersetzungsreaktion, gekennzeichnet durch:

Eine Anordnung von engen, von dem verdichteten Athylen durchströmtem, Rohren (153) mit einer Länge von mindestens 1 Meter und einem Innendurchmesser von höchstens etwa 4 Zentimetern;

einen Mantel (156), der einen Aufnahmeraum (157) begrenzt, der einen Flüssigkeitsvorrat enthält, der normalerweise etwa auf der Umgebungstemperatur gehelten wird und dessen Oberfläche normalerweise der Umgebung derart ausgesetzt ist, daß Dampf von der Oberfläche der Flüssigkeit verdampft werden kann, wobei die Anordnung der Rohre beträchtlich unter die Oberfläche des Flussigkeitskörpers eingetaucht ist;

eine Einführungseinrichtung zum Einführen von Gas aus einem mit einer Gasrohrleitung (120) verbundenen Zuführungsrohr (151) in die Rohranordnung; und

eine Austrittseinrichtung zum Einleiten von Gas aus der Rohranordnung in ein mit der Gasrohrleitung (120) verbundenes Austrittsrohr (155).

3. In einem Rohrleitungssystem für Äthylengas mit Strömungswegen für das Gas, das normalerweise auf mehr als etwa 30 Atmosphären verdichtet gefahrlos strömen kann, aber gegebenenfalls an einer exothermen Reaktion teilnehmen kann, die von einem Ursprungsort in verschiedenen Richtungen fortschreiten kann, die Vorrichtung zum Anhalten des Fortschreitens einer Reaktionsgrenze dieser exothermen Reaktion, gekennzeichnet durch:

Eine Anordnung von mehreren von dem Gas durchströmten, engen Rohren (153) mit einer Länge von mindestens 1 Meter und einem Innendurchmesser von höchstens 4 Zentimetern;

eine Tragkonstruktion zum Halten der engen Rohre in einer Stellung, in der die Außenseite der Rohranordnung beträchtlich unter die Oberfläche einer Flüssigkeit eingetaucht ist, die normalerweise auf ungefähr Umgebungstemperatur gehalten wird und geeignet ist, das in der Rohranordnung strömende Gas auf eine Temperatur unter 150°C zu kühlen, so daß im Falle des Fortschreitens einer Reaktionsgrense in ein Ende der Anordnung der engen Rohre die Reaktionsgrenze unter die Reaktionstemperatur abgekühlt und abgeschrecht wird, ehe die Reaktionsgrenze bis zum anderen Ende der Rohre fortschreiten kann;

ein Einführungseinrichtung zum Einführen von Gas aus einem mit der Rohrleitung verbundenen Zuführungsrohr (151) in die Rohranordnung; und

eine Austrittseinrichtung zum Einleiten von Gas aus der Rohranordnung in ein mit der Gasrohrleitung (120) verbundenes Austrittsrohr (155).

4. In einem Rohrleitungssystem für Äthylengas mit Strömungswegen für das Gas, das normalerweise auf mehr als etwa 30 Atmosphären verdichtet gefahrlos in dem Rohrleitungssystem strömen kann, aber gegebenenfalls an einer exothermen Reaktion teilnehmen kann, die von einem Ursprungsort in verschiedenen Richtungen fortschreiten kann, das Verfahren zum Anhalten des Fortschreitens der Reaktionsgrenze dieser exothermen Reaktion in dem Rohrleitungssystem, gekennzeichnet durch folgende Merkmale:

Der Weg der Gasströmung wird derart gesteuert, daß in geeigneten Zonen einer beabsichtigten Strömung des Gases dieses anstatt durch einen üblichen Teil einer Gasrohrleitung zu strömen durch eine Anordnung von engen Rohren geführt wird, die Querschnittsdimensionsen von höchstens 4 Zentimetern haben und länger sind als 1 Meter;

das Gas wird in den genannten engen Rohren durch einen Wärmeaustausch zwischen dem Gas und einer Flüssigkeit gekühlt, die normalerweise auf ungefähr Umgebungstemperatur gehalten wird, so daß das Gas in nächster Nähe einer etwa vorhandenen, fortschreitenden Reaktionsgrenze in den dünnen Gasströmen unter die Reaktionstemperatur gekühlt wird und daher das in den engen Rohren strömende Gas der exothermen Reaktion nicht unterworfen wird, weil es durch den Wärmeaustausch mit der Kühlflüssigkeit abgeschreckt wird.

5. Vorrichtung nach Anspruch 3, dadurch gekennzeichnet, daß die Einführungs- und die Austrittseinrichtung genügend äquivalent sind, so daß sich die Reaktionsgrenze in einer von beiden Richtungen durch die Rohranordnung bewegen kann und die Verwendung einer Einrichtung als Zuführungsund Austrittseinrichtung von der Richtung der Bewegung der Reaktionsgrenze in der Rohrleitung abhängig ist.

6. Vorrichtung nach Anspruch 3, dadurch gekennzeichnet, daß als die normalerweise auf ungefähr Umgebungstemperatur gehaltene Flüssigkeit ein verdampfbares wässriges System verwendet wird.

7. Vorrichtung nach Anspruch 2, dadurch gekennzeichnet, daß die Vorrichtung für verdichtetes Äthylen geeignet ist, das auf einer Temperatur unter 150°C gehalten wird.

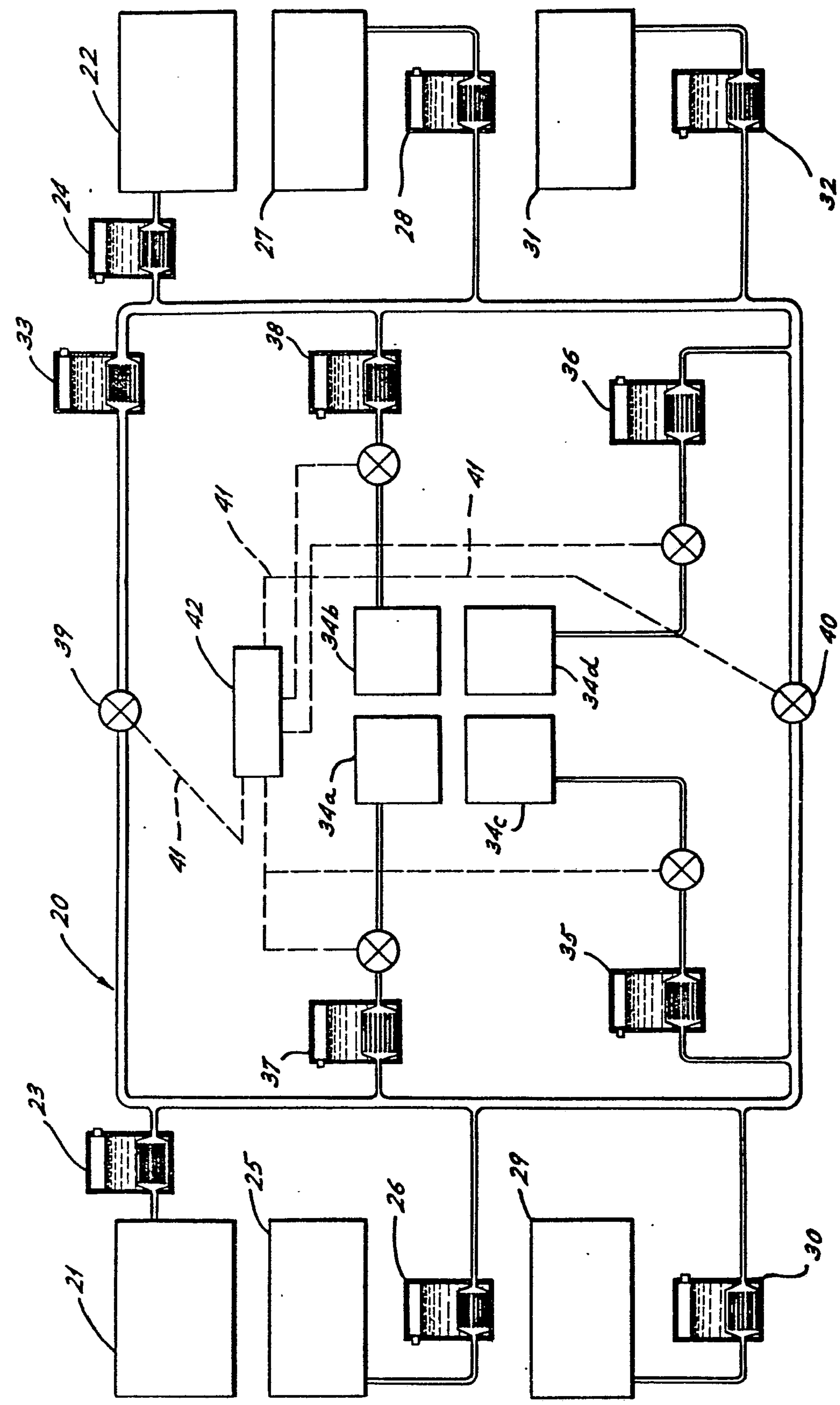

22
27
28
31
32
24
33
38
36
41
41
41
42
34b
34d
39
40
34a
34c
41
20
35
37
23
25
26
29
21
30


FIG. 1.

FIG. 2.